(19) **Europäisches Patentamt / European Patent Office / Office européen des brevets**

(11) **EP 4 388 374 B1**

(12) **EUROPÄISCHE PATENTSCHRIFT**

(45) Veröffentlichungstag und Bekanntmachung des Hinweises auf die Patenterteilung:
**10.09.2025   Patentblatt 2025/37**

(21) Anmeldenummer: **22808839.9**

(22) Anmeldetag: **27.10.2022**

(51) Internationale Patentklassifikation (IPC):
***G05B 19/042*** *(2006.01)*

(52) Gemeinsame Patentklassifikation (CPC):
**G05B 19/042;** G05B 2219/37532;
G05B 2219/37533

(86) Internationale Anmeldenummer:
**PCT/EP2022/080135**

(87) Internationale Veröffentlichungsnummer:
**WO 2023/083626 (19.05.2023 Gazette 2023/20)**

(54) **SYNCHRONISIEREN VON IN EINEM JEWEILIGEN ERFASSUNGSTAKT GELIEFERTEN ERFASSUNGSWERTEN FÜR EINE SICHERHEITSFUNKTION**

SYNCHRONISING DETECTION VALUES SUPPLIED IN A RESPECTIVE DETECTION CYCLE FOR A SAFETY FUNCTION

SYNCHRONISATION DES VALEURS DE DÉTECTION FOURNIES LORS D'UNE CADENCE DE DÉTECTION RESPECTIVE POUR UNE FONCTION DE SÉCURITÉ

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität:  **12.11.2021   EP 21207988**

(43) Veröffentlichungstag der Anmeldung:
**26.06.2024   Patentblatt 2024/26**

(73) Patentinhaber: **Siemens Aktiengesellschaft**
**80333 München (DE)**

(72) Erfinder:
• **BUDDAY, Dominik**
**91056 Erlangen (DE)**
• **LE, Minh**
**06406 Bernburg (DE)**
• **MOLITOR, Matthias**
**96110 Wiesengiech (DE)**
• **STEIN, Alexander**
**90587 Veitsbronn (DE)**
• **ZITTLAU, Peter**
**91083 Baiersdorf (DE)**

(74) Vertreter: **Siemens Patent Attorneys**
**Postfach 22 16 34**
**80506 München (DE)**

(56) Entgegenhaltungen:
EP-A1- 2 924 519         DE-A1- 102020 205 521
US-A1- 2016 329 975

## Beschreibung

Die Erfindung betrifft ein Verfahren zum Synchronisieren von in einem jeweiligen Erfassungstakt gelieferten Erfassungswerten, wobei die Erfassungswerte von einer sicherheitsgerichteten Steuerung in einem Überwachungstakt gemäß einer Sicherheitsfunktion verarbeitet werden, sowie eine zugehörige sicherheitsgerichtete Steuerungseinheit.

In vielen Anwendungsbereichen in der Industrieautomatisierung sind mehrere Antriebsachsen beteiligt. Beispielsweise sind mehrere Achsen einer Mehrachskinematik an einer Bewegung beteiligt und werden dafür entsprechend angesteuert. Dabei ergibt sich eine Gesamtbewegung, beispielsweise eines Endeffektors, erst durch die jeweilige Bewegung der einzelnen Achsen. Oftmals müssen solche Bewegungen sicher ausgeführt werden, das heißt unter Einhaltung von Safety-Anforderungen, die beispielsweise eine Überwachung der Einhaltung von Positions- oder Geschwindigkeitsgrenzen umfassen.

Ebenso werden in zahlreichen Anwendungen Geber- oder Sensorwerte von verschiedensten Gebern oder Sensoren innerhalb einer Anlage zu einem gemeinsamen Wert verarbeitet, beispielsweise zu einem Überwachungswert, der für die Einhaltung bestimmter Grenzwerte laufend ermittelt und überwacht wird.

In einem synchronen Betrieb werden die verschiedenen erfassten Werte in einem einheitlichen Erfassungstakt, d.h. zueinander zeit-synchronisiert erfasst.

Je nach Anwendung und Art der verbauten Komponenten ist so ein synchronisierter Betrieb jedoch nicht gewährleistet. Auch für den sogenannten asynchronen Betrieb, bei dem ein einheitlicher Erfassungstakt oder eine Taktsynchronität bei der Erfassung oder Übertragung von Werten nicht gewährleistet ist oder ein nicht-taktsynchroner, zyklischer Aufruf von Erfassungswerten zur weiteren Verarbeitung erfolgt, sollen jedoch verlässliche Werte zur Überwachung verschiedenster Funktionen generiert werden können.

Die US-Offenlegungsschrift US 2016/0329975 A1 zeigt einen digitalen Messeingang für eine elektrische Automatisierungseinrichtung, wobei digitale Messwerte erhalten werden, wobei eine Signalumwandlungsvorrichtung so konstruiert ist, dass sie digitale Ausgangsmesswerte bereitstellt, wobei die digitalen Ausgangs-Messwerte hinsichtlich ihrer Abtastrate und/oder ihres jeweiligen Abtastzeitpunktes an eine vorgegebene Abtastrate und/oder vorgegebene Abtastzeitpunkte angepasst sind. Es wird ein Interpolator und Decoder-Filter vorgeschlagen, die derart aufeinander abgestimmt sind, dass durch sie die Anpassung der digitalen Eingangs-Messwerte hinsichtlich Abtastrate und/oder Abtastzeitpunkten bewirkt wird.

Die Offenlegungsschrift DE 10 2020 205 521 A1 zeigt ein System zur Bereitstellung von Messdaten in einem Fahrzeug und das System ist geeignet, die Messdaten gebündelt bereitzustellen. Das gezeigte System umfasst eine Zeitsynchronisations-Einrichtung, die typischerweise geeignet ist, eine Zeitsynchronisation der Messdaten und/oder der zentralen Messdatenschnittstelle und/oder der Messdaten-Erfassungseinrichtung und/oder des Fahrzeug-Zentralsteuergeräts und/oder der Schnittstellen und/oder der Prozessoren vorzunehmen, sodass die Messdaten in zeitlich synchronisierter Form gebündelt bereitgestellt werden können.

Die europäische Anmeldung EP 2 924 519 A1 zeigt ein Duplexsystem, das mindestens eine Spannung und einen Strom misst und ausgibt. Ein erstes Messgerät misst mindestens eine der Spannungen und/oder den Strom. Ein zweites Messgerät misst mindestens die Spannung und den Strom. Eine Steuereinrichtung ist von der ersten Messeinrichtung getrennt und führt bei einem abnormalen Betrieb der ersten Messeinrichtung eine Umschaltung auf die zweite Messeinrichtung durch. Ein Filter filtert einen zweiten Messwert des zweiten Messgeräts basierend auf einem ersten Messwert des ersten Messgeräts, um einen gefilterten Wert auszugeben.

Vor diesem Hintergrund ist es eine Aufgabe der vorliegenden Erfindung eine Sicherheitsfunktion für beliebig, insbesondere asynchron oder nicht-taktsynchron, erfasste oder verarbeitete Erfassungswerte zu verbessern. Diese Aufgabe wird durch die Merkmale der unabhängigen Ansprüche gelöst. Vorteilhafte Ausgestaltungen sind in den abhängigen Ansprüchen angegeben.

Die Erfindung betrifft ein Verfahren zum Synchronisieren von in einem jeweiligen Erfassungstakt gelieferten Erfassungswerten, wobei die Erfassungswerte von einer sicherheitsgerichteten Steuerung in einem Überwachungstakt gemäß einer Sicherheitsfunktion verarbeitet werden, gemäß Anspruch 1.

Die verschiedenen erfassten Werte werden von der sicherheitsgerichteten Steuerung verarbeitet, die selbst in einem Überwachungstakt arbeitet, insbesondere um laufend aktuelle Überwachungswerte zu generieren. Es kommt dabei beispielsweise durch einen nicht-deterministischen Aufruf der Erfassungswertverarbeitung, d.h. einen nicht taktsynchronen, zyklischen Aufruf der Erfassungswertverarbeitung zur Bildung des Überwachungswertes zu einem Jitter. Zudem erfolgt die Erfassung und/oder die Bereitstellung der Werte in einem Erfassungstakt, wobei beliebig viele der verschiedenen Erfassungswerte in einem eigenen Erfassungstakt, insbesondere alle in einem anderen Takt, erfasst und/oder geliefert werden. Man kann auch davon sprechen, dass die Uhren des jeweiligen Systems, in dem die jeweiligen Erfassungswerte erfasst werden, nicht miteinander synchronisiert sind oder auseinander laufen. Ebenso kann man davon sprechen, dass die Uhren zwischen dem Erfassungssystem und dem Überwachungssystem nicht zwangsläufig synchronisiert sind. Ferner können sogenannte Aufsynchronisierungszeitpunkte unterschiedlich oder ungleichmäßig sein, so dass an sich taktsynchron erfasste Erfassungswerte zur weiteren Verarbeitung für den Überwachungswert, insbesondere durch ein Erfassungswertverarbeitungssystem, zeitlich unsynchronisiert empfangen und weiterverarbeitet werden. Zudem kann es auch in einem Übertragungssystem zur Übertragung der Erfassungswerte hin zur Einheit, die den Überwachungswert bildet, zu Jitter aufgrund von nicht äquidistanter Übertragung, beispielsweise bei Übertragung über Ethernet, kommen.

Aufgrund dieser durch verschiedene und insbesondere gleichzeitig vorliegende Effekte bewirkten zeitlichen Nebenläufigkeit liegen in der sicherheitsgerichteten Steuerung mehrere Erfassungswerte für die Bildung eines Überwachungswertes vor, die nicht zu einem einheitlichen Zeitwert oder einem einheitlichen oder gemeinsamen Zeitpunkt gehören. Beispielsweise liegen bei Positionswerten, die in einem asynchronen Achsbetrieb geliefert werden, die Angaben zu Positionen der einzelnen Achsen, die in einem Überwachungstakt der Steuerung verarbeitet werden sollen, gegebenenfalls zeitgleich in der Steuerung vor, beziehen sich aber auf unterschiedliche Zeitpunkte. D.h. die gelieferten Positionen wurden von den jeweiligen Achsen zwar tatsächlich angenommen, jedoch ist nicht sichergestellt, dass die verschiedenen Positionswerte hinsichtlich des Zeitbezugs miteinander vergleichbar sind. Die Informationen zu entsprechenden Achspositionen sind daher nicht sinnvoll kombinierbar, um eine insgesamt aufgrund des Zusammenwirkens der Achsen angenommenen Positionswert, beispielsweise den Positionswert eines Endeffektors einer Mehrachskinematik, zu ermitteln und zu überwachen.

Der Überwachungswert wird aus mindestens zwei Erfassungswerten gebildet, ist also ein gemeinsamer oder zusammengesetzter oder kombinierter Überwachungswert. Der Überwachungswert kann eine sinnvolle Aussage zu einem zu überwachenden Zustand, beispielsweise einer Position oder Temperatur oder Geschwindigkeit, der von mehreren Erfassungswerten abhängig ist, nur sinnvoll gebildet werden, wenn die jeweiligen Erfassungswerte eine Aussage zu einem gemeinsamen Zeitpunkt treffen.

Dafür erfolgt die Anpassung nach dem oben vorgeschlagenen Verfahren.

Die einzelnen Erfassungswerte werden entweder direkt verarbeitet oder einer oder mehrere der Erfassungswerte werden zunächst abgeleitet und gehen in abgeleiteter Form in die Ermittlung des Überwachungswertes ein. Es handelt sich somit um einen kombinierten oder gemeinsamen Überwachungswert, der abhängig von mehreren erfassten Werten gebildet wird.

Die mehreren erfassten Werte werden beispielsweise durch mehrere lokal verbaute Sensoren oder Geber geliefert. Beispielsweise werden sie ferner zumindest teilweise durch Simulationsprogramme oder Cloud-basierte Anwendungen geliefert.

Der Erfassungstakt wird beispielsweise durch eine Erfassungseinheit für den jeweiligen Wert vorgegeben, beispielsweise den jeweiligen Sensor. Handelt es sich bei den einzelnen zu erfassenden Werten um Achswerte, wie beispielsweise Achspositionen, so wird der Erfassungstakt durch den Antriebstakt an der jeweiligen Achse vorgegeben. Ferner wird der Erfassungstakt beispielsweise durch einen vorhandenen Bus beeinflusst, wobei die erfassten Werte dann im Bustakt geliefert werden und der Bustakt dann den Erfassungstakt darstellt.

Beispielsweise handelt es sich bei den Erfassungswerten um Geber- oder Sensorwerte, die sich auf eine Bewegung eines Gerätes oder einer Maschine, gesteuert durch die sicherheitsgerichtete Steuerung, beziehen. Beispielsweise ist eine Überwachung dieser Bewegung durch die Sicherheitsfunktion vorgesehen.

Der Überwachungstakt wird durch die sicherheitsgerichtete Steuerung vorgegeben. Beispielsweise ist der Überwachungstakt durch einen Bewegungszyklus vorgegeben, der auf der Steuerungseinheit vorgesehen ist. Beispielsweise läuft ein Safety-Baustein zur sicheren Bewegungsüberwachung auf der gleichen CPU wie eine Bewegungsführung, beispielsweise die eines Roboters, und hat einen größeren Takt als die Bewegungsführung.

Die jeweiligen Zählerinkremente ermöglichen eine Berücksichtigung von seit dem letzten gelieferten Wert abgelaufenen Zeiten in den jeweiligen Erfassungssystemen, beispielsweise an den jeweiligen Achsen. Dabei ist eine absolute Zählerzeit irrelevant. Beispielsweise werden in jedem Bus-Takt alle Achs-Telegramme der Sicherheitssteuerung zur Verfügung gestellt, wobei alle Achsen mit einem beliebigen Initial-Zählerwert beginnen. Jede Achse hat beispielsweise ihre eigene lokale Uhr in Form eines Zählers oder Zeitstempels, der mit fortschreitender Zeit um ein ganzzahliges Inkrement hochzählt. Hierbei entspricht die Dauer eines Inkrements dem Antriebstakt.

Die Inkremente der Zähler der verschiedenen im aktuellen Überwachungszyklus erfassten Werte werden miteinander verglichen, um den zeitlich aktuellsten Wert zu ermitteln. Die jeweiligen Zählerinkremente, beispielsweise die Zählerinkremente je Achse, werden ermittelt durch einen Abgleich des Zählerwertes im aktuellen Überwachungstakt mit einem Zählerwert des Erfassungswertes im vorherigen Überwachungstakt. Dabei handelt es sich bei dem Zählerwert des Erfassungswertes im vorherigen Überwachungstakt ggf. um einen angepassten Zählerwert. Dies ist der Fall, wenn im vorherigen Überwachungszyklus bereits das hier vorgeschlagene Anpassungsverfahren durchgeführt wurde. Liegt noch kein angepasster Erfassungswert vor oder ergab sich aufgrund des Zählerinkrementvergleichs keine Notwendigkeit einer Anpassung im vorherigen Überwachungszyklus, so wird direkt der mit dem im letzten Überwachungstakt gelieferten Erfassungswert gelieferte Zählerwert für die Bildung des Zählerinkrements verwendet.

Das maximale Zählerinkrement, auch globales Zählerinkrement genannt, der jeweiligen Zählerinkremente, auch lokale Zählerinkremente genannt, legt für den aktuellen Überwachungszyklus schließlich fest, auf welchen Zeitpunkt die jeweiligen Erfassungswerte anzupassen sind, falls sie diesem Zeitpunkt des Erfassungswertes mit dem zugehörigen maximalen Zählerinkrement nicht ohnehin entsprechen.

Vorteilhafterweise wird mit dem vorgeschlagenen Verfahren eine plausible Aussage beispielsweise über eine aktuelle AchsPosition des empfangenen Telegramms getroffen. So wird vorteilhaft die Sicherheit und Verfügbarkeit im System erhalten. Durch präziser berechenbare Sicherheitsgrenzwerte ist eine sinnvolle, d.h. möglichst wenig unnötig vorsichtige, Nutzung bei gleichzeitig hoher Sicherheit gewährleistet.

Beispielsweise werden alle Telegramme, die beispielsweise von verschiedenen beteiligten Achsen empfangen werden, synchronisiert oder derart verändert, dass sie zeitlich zueinander konsistent sind. Man kann daher auch von der Funktionalität eines Telegramm-Filters sprechen. Somit wird insgesamt bei gemeinsamer Berücksichtigung aller ggf. angepasster Erfassungswerte für den davon abhängigen Überwachungswert ein plausibler, möglichst nah am tatsächlich vorliegenden Überwachungswert liegender Wert ermittelt.

Mit dem vorgeschlagenen Verfahren wird ein sicherheitsgerichteter Betrieb im asynchronen Modus ermöglicht. Somit können sicherheitsgerichtet Bewegungen beispielsweise einer Mehrachskinematik überwacht werden, ohne dass alle beteiligten Achsen hinsichtlich ihrer jeweiligen Antriebs- und Bus-Takte sowie in Bezug auf einen Überwachungszyklus synchronisiert sein müssen. Die damit einhergehende Erschließung einer asynchronen Projektierung erlaubt eine größere Breite an Use-Cases. Beispielsweise können vorteilhaft 6-Achs Kinematiken, wie sie typischerweise bei Werkzeugmaschinen zum Einsatz kommen, dadurch mit vergleichbarer Genauigkeit und Verfügbarkeit der Sicherheitsfunktionen wie im synchronen Modus betrieben werden.

Die vorgeschlagene Anpassung der Erfassungswerte mittels der beschriebenen Filterfunktionalität kann insbesondere mehrere Effekte, die zu zeitlicher Nebenläufigkeit und damit zu Ungenauigkeiten bei der Ermittlung des Überwachungswertes beitragen, quasi gleichzeitig beheben, sofern sie auftreten: eine mögliche zeitliche Asynchronität aufgrund eines notwendigen Aufsynchronisierens von im Safety-Zyklus einer sicherheitsgerichteten Antriebssteuerung erfassten und bearbeiteten Erfassungswerte auf einen Kommunikationstakt - auch wenn dieser selbst taktsynchron ist - sowie eine mögliche Asynchronität zwischen diesem Kommunikationstakt und dem nicht taktsynchronen Verarbeitungstakt des Safety-Funktionsbausteins in der Bewegungssteuerung, beispielsweise einem Aufruftakt der Applikation. In allen Stufen kann es auf dem Weg der Erfassung und Übertragung der Erfassungswerte bis hin zur Ermittlung des Überwachungswertes zu Asynchronitäten kommen aufgrund von verteilten sowie überlagerten Komponenten. Die Anpassung der Erfassungswerte behebt vorteilhafterweise eine bestehende zeitliche Nebenläufigkeit.

Gemäß einer Ausgestaltung werden die Erfassungswerte in einem gemeinsamen Erfassungstakt oder in jeweiligen unterschiedlichen Erfassungstakten geliefert. Beispielsweise sind die Erfassungstakte von verschiedenen Gebern oder Sensoren, die jeweils einen der Erfassungswerte liefern, die in die Bildung des Überwachungswertes eingehen, prinzipiell in einem gemeinsamen Takt, laufen aber dennoch für kurze Phasen auseinander und somit nicht synchron. Ferner sind auch Anwendungen mit hoher Genauigkeit sicherheitsgerichtet überwachbar, bei welchen zwar ein gemeinsamer Taktgeber der einzelnen Erfassungswerte vorliegt, beispielsweise ein gemeinsamer Taktgeber aller beteiligten Achsen vorhanden ist, sodass sie sich auf lange Sicht zeitlich nicht voneinander entfernen, bei welchen jedoch für kurze Zeitphasen keine Synchronität zueinander sichergestellt ist.

In anderen Szenarien ist der Erfassungstakt gleich, jedoch sind verschiedene Bus- oder andere Übertragungssysteme beteiligt, die keinen einheitlichen Takt aufweisen. Wiederum in anderen Szenarien sind die Erfassungstakte von vornherein unterschiedlich oder vollständig unbekannt. Für alle beschriebenen Ausgangssituationen bietet die vorgeschlagene Lösung die Sicherheit, dass dennoch Erfassungswerte miteinander verglichen werden oder einander zugeordnet werden oder gemeinsam für die Bildung eines gemeinsamen Überwachungswertes verwendet werden, deren zumindest potentiell zeitliche Asynchronität berücksichtigt wird und somit zu einem genaueren Überwachungswert führt.

Gemäß einer Ausgestaltung weicht der Überwachungstakt von dem Erfassungstakt oder zumindest von einzelnen Erfassungstakten ab. Beispielsweise tastet die Sicherheitssteuerung in jedem Safety-Takt die Achs-Telegramme von beteiligten Achsen, deren Zusammenwirken überwacht werden soll, zusammen mit ihren Zählerwerten, beispielsweise einem aktuellen Zeitstempel, und dazugehörigen Positionswerten vom Bus ab. Je nachdem wie das Verhältnis der Dauer zwischen Safety-Takt und Bus-Takt eingestellt ist, liegt entweder eine Überabtastung, d.h. Bus-Taktdauer größer als Safety-Taktdauer, oder eine Unterabtastung, d.h. Bus-Taktdauer kleiner als Safety-Taktdauer, der Telegramme vor. In einem asynchronen Achsbetrieb können, falls Bustakt und Safety-Takt unterschiedliche Zeitdauer haben und Achstelegramme zu oft (Überabtastung) oder zu selten (Unterabtastung) vom Bus gelesen werden, vorteilhaft die axialen und vor allem auch die kartesischen Positionen sowie die Geschwindigkeiten von Mehrachskinematiken sicher überwacht werden. Somit berücksichtigt die vorgeschlagene Filterfunktionalität auf Seiten beispielsweise einer CPU in der Sicherheitssteuerung eine Asynchronität zwischen einem Kommunikationstakt und einem zyklischen, aber nicht taktsynchronen Verarbeitungstakt eines Safety-Funktionsbausteins.

Gemäß einer Ausgestaltung werden die Erfassungswerte mittels eines Telegramms an die sicherheitsgerichtete Steuerung geliefert. Beispielsweise kommen Telegramme eines Bussystems zum Einsatz, das in einer Anlage, beispielsweise einer Fertigungsanlage oder einer Prozessanlage, für die kommunikative Verbindung einzelner Anlagenkomponenten oder Maschinen genutzt wird.

Gemäß einer Ausgestaltung werden die Erfassungswerte von jeweiligen Achsen einer Mehrachskinematik geliefert. Insbesondere bei Mehrachskinematiken, wie sie in Robotik-Anwendungen oftmals zum Einsatz kommen, ergibt sich der Vorteil, dass Erfassungswerte von verschiedenen Achsen als Eingabewerte benötigt werden, um daraus einen Überwachungswert zu bilden, der einen Status oder einen Zustand der Kinematik überwacht, beispielsweise eine Position oder Geschwindigkeit an einem Endeffektor. Die verschiedenen Erfassungswerte zusammen ergeben den Wert, der überwacht werden soll. Die Erfassungswerte der verschiedenen Achsen werden gemäß der Ausgestaltung derart miteinander synchronisiert, dass sie zeitlich zueinander passen, d.h. dass die gelieferten Werte zu gleichen und damit vergleichbaren Erfassungszeitpunkten gehören. Mit der vorgeschlagenen Ausgestaltung lässt sich sicherstellen, dass möglichst korrekte Positions- oder Geschwindigkeitswerte ermittelt werden, die die Kinematik mit größerer Wahrscheinlichkeit eingenommen hat als ohne die vorgenommene Anpassung und es wird die Gefahr vermieden, dass aufgrund zeitlicher Nebenläufigkeit der beteiligten Antriebsachsen eine ungenaue oder falsche Position oder Geschwindigkeit ermittelt wird, die beispielsweise der Endeffektor mit großer Wahrscheinlichkeit nie eingenommen hatte. Somit wird die Sicherheit und Zuverlässigkeit der Sicherheitsfunktion erhöht.

Gemäß einer Ausgestaltung erhält die sicherheitsgerichtete Steuerung die Erfassungswerte von verteilten Erfassungssystemen. Beispielsweise liefern die sechs Achsen eines typischen 6-Achs-Roboters jeweils einen Erfassungswert. Wenn die Synchronisation dieser Erfassungssysteme auf den Kommunikationstakt, in dem die sicherheitsgerichtete Steuerung die Erfassungswerte empfängt, unkoordiniert stattfindet und die Erfassung der Werte untersetzt zum Kommunikationstakt erfolgt, kann dieser Versatz mit der vorgeschlagenen Anpassung erkannt und korrigiert werden, womit der daraus abgeleitete Überwachungswert präziser wird. Die Erfassungswerte werden beispielsweise durch die Sicherheitssteuerung von mindestens zwei Control Units, kurz CUs, von mindestens zwei Achsantrieben verteilt empfangen und liegen somit für die Ermittlung des Überwachungswertes nicht zeitsynchronisiert vor. Mit der vorgeschlagenen Anpassung auf einen gemeinsamen Zählerwert werden die Erfassungswerte der verschiedenen CUs miteinander synchronisiert und der daraus abgeleitete Überwachungswert wird präziser.

Bei mehreren CUs synchronisieren diese ihren Safety-Zyklus auf den Kommunikationstakt, wobei die Synchronisation in der Regel allerdings unkoordiniert zu einem mehr oder weniger beliebigen Kommunikationstakt erfolgt, beispielsweise dann, wenn der Antrieb dazu bereit ist. Das kann dazu führen, dass die eine CU sich auf einen geraden Kommunikationstakt, die andere sich auf einen ungeraden Kommunikationstakt aufsynchronisiert, womit im weiteren Verlauf die Sensordatenerfassung auf den beiden CUs um einen Kommunikationstakt versetzt erfolgt. Beide CUs sind jedoch insbesondere immer noch als taktsynchron zu betrachten. Der Safetyzyklus des Antriebs ist beispielsweise zum Kommunikationstakt untersetzt mit einem Kommunikationstakt von 4ms und einem Safety-Takt des Antriebs von 8ms. Die CU liefert dann in zwei Kommunikationszyklen hintereinander die gleichen Zähler und Werte. Das vorgeschlagene Anpassungsverfahren kann das erkennen, weil die Zykluszähler sich nun in unterschiedlichen Takten inkrementieren.

| Kommunikationstakt: | 1 | 2 | 3 | 4 | 5 | 6 | 7 |
|---|---|---|---|---|---|---|---|
| Zähler Antrieb1: | 1 | 1 | 2 | 2 | 3 | 3 | 4 |
| Zähler Antrieb2: | 5 | 6 | 6 | 7 | 7 | 8 | 8 |

Immer wenn eine Zähler-Inkrementierung festgestellt wird, ist der empfangene Wert als aktueller zu bewerten, während der zum zweiten Mal empfangene Wert als älter zu betrachten ist und entsprechend korrigiert wird.

Somit können in Ausführungen der Erfindung einerseits eine Asynchronität zwischen dem Kommunikationstakt und einem zyklischen, aber nicht taktsynchronen Safety-Zyklus wie oben beschrieben berücksichtigt werden und andererseits zusätzlich antriebsseitig für sich betrachtet taktsynchrone sicherheitsgerichtete Antriebssteuerungen durch Anpassung der Erfassungswerte in zeitliche Synchronität zum Kommunikationstakt gebracht werden.

Gemäß einer Ausgestaltung werden als Erfassungswerte Positionswerte, Geschwindigkeitswerte, Kraftwerte, Temperaturwerte, Füllstandswerte, Stromwerte oder Spannungswerte erfasst. Die Positions-, Geschwindigkeits-, Kraft-, Temperatur- Füllstands-, Strom- oder Spannungswerte werden kombiniert, um als Überwachungswert einen Gesamt-Positions-, Geschwindigkeits-, Kraft-, Temperatur-, Füllstand-, Strom- oder Spannungswert zu erhalten. Beispielsweise werden an einer Anlage an den verschiedensten Stellen in einem Fertigungsablauf Werte erfasst, die zu einem Gesamt-Erfassungswert verarbeitet werden, um diesen dann als Überwachungswert mittels einer Sicherheitsfunktion überwachen zu lassen. Die vorgeschlagene Ausgestaltung ist insbesondere dann vorteilhaft, wenn ein Zustand als Gesamt-Überwachungsgröße überwacht werden soll, der Abhängigkeiten zu den verschiedenen Erfassungswerten aufweist, so dass die zeitliche Synchronität der Erfassungswerte für die Genauigkeit des Überwachungswertes wichtig ist. Beispielsweise wird aus den einzelnen zumindest teilweise angepassten Stromwerten ein Kraftwert als zu überwachender Wert ermittelt, der mit der durchgeführten Anpassung der einzelnen Stromwerte - soweit notwendig - auf eine gemeinsame Zählerinkrementierung hin eine sehr präzise Überwachung des tatsächlich zum jeweiligen Zeitpunkt vorliegenden Kraftwertes ermöglicht wird.

Gemäß einer Ausgestaltung bildet die Sicherheitsfunktion basierend auf aus dem oder den angepassten Erfassungswerten sowie aus dem oder den zu dem maximalen Zählerinkrement zugehörigen Erfassungswerten abgeleiteten Größen den mindestens einen Überwachungswert. Vorteilhaft gehen in die Ermittlung des Überwachungswertes ausschließlich oder zusätzlich zu den soweit notwendig angepassten Erfassungswerten auch aus diesen abgeleitete Größen ein. Beispielsweise werden aus angepassten Positionswerten sowie aus den Positionswerten, die keine Anpassung benötigen, Geschwindigkeitswerte abgeleitet. Beispielsweise gehen diese Geschwindigkeitswerte in die Sicherheitsfunktion ein, um die Sicherheitsfunktion "Sichere Geschwindigkeit" auszuführen, bei der überwacht wird, dass ein Endeffektor eine Grenzgeschwindigkeit nicht überschreitet und ggf. Maßnahmen wie Stoppvorgänge einleitet.

Gemäß einer Ausgestaltung wird ein parametrierbarer Grenzwert eingerichtet, der eine erlaubte Differenz jeweiliger Zählerinkremente festlegt. Somit wird eine Asynchronität quasi nach oben hin begrenzt. Es wird eine maximal erlaubte Abweichung zwischen jeweiligen Zykluszählerunterschieden eingeführt, bei deren Überschreitung eine Anpassung der Erfassungswerte nach einem der vorgeschlagenen Verfahren nicht mehr stattfinden soll, sondern stattdessen beispielsweise eine Fehlermeldung ausgegeben werden soll und/ oder eine Stopp-Funktion ausgeführt werden soll. Somit wird ein Schweben der einzelnen Erfassungswerte in zeitlicher Hinsicht zueinander geduldet und vorteilhaft korrigiert, allerdings nur bis zu dem festgelegten Grenzwert. Dieser wird beispielsweise je Anlage oder bei einem Einrichten der Anlage durch die Steuerung vorgegeben und festgelegt. Somit wird die Filterfunktionalität begrenzt, was beispielsweise für Fehlerfälle wie ausgefallene Sensoren eine vorteilhafte Ergänzung der vorgesehenen Sicherheitsfunktionen darstellt.

Erfindungsgemäß werden diejenigen Erfassungswerte, die nicht das maximale Zählerinkrement aufweisen, angepasst, indem eine Extrapolation anhand zuvor ermittelter oder zuvor angepasster Erfassungswerte durchgeführt wird. Beispielsweise wird eine lineare Extrapolation durchgeführt. Beispielsweise wird ein erfasster Positionswert, der nicht das maximale Zählerinkrement aufweist, extrapoliert. Dafür wird beispielsweise zunächst eine aufgrund der letzten Positionswerte und Zeitinkremente ermittelbare Geschwindigkeit, die somit beispielsweise eine möglichst aktuelle axiale Momentangeschwindigkeit darstellt, angenommen für die lineare Extrapolation der Position. Auch für eine beispielsweise ungleichmäßig laufende Achse, die bei vorgegebener Geschwindigkeit in jedem Takt leicht um diese Geschwindigkeit schwankt, d.h. in jedem Takt leicht beschleunigt oder abbremst, ist eine lineare Extrapolation gegenüber einer beispielsweise quadratischen Extrapolation (Berücksichtigung von momentaner Beschleunigung) einfach durchzuführen, da sich hierbei vorübergehende Beschleunigungen nicht auswirken. Ebenso ist es allerdings auch möglich mit Polynomen höherer Ordnung zu extrapolieren, welche momentane Beschleunigung, Ruck etc. einbeziehen. Dabei werden beispielsweise bei einer quadratischen Extrapolation drei Positionswerte, nämlich vom aktuellen Takt und den letzten beiden Takten, mit in die Rechnung einbezogen und in jedem Takt aktualisiert.

Gemäß einer Ausgestaltung leitet die Sicherheitsfunktion abhängig von dem mindestens einen Überwachungswert Sicherheitsfunktionen ein. Typische Sicherheitsfunktionen sind das Abbremsen beteiligter Bewegungsachsen, um in bestimmten Zonen mit reduzierter Geschwindigkeit zu fahren, oder das Einleiten von Stopp-Vorgängen, um in Kollisionsbereichen Gefahren zu vermeiden. Genauso können Alarmausgaben oder -meldungen vorgesehen sein, beispielsweise bei Temperatur- oder Drucküberschreitungen, die sich aufgrund des Überwachungswertes aus den einzelnen Erfassungswerten ergeben.

Gemäß einer Ausgestaltung wird durch die Sicherheitsfunktion ein Fehler berechnet, der bei der Überwachung des Überwachungswertes berücksichtigt wird. Der Fehler berücksichtigt die Ungenauigkeit, die sich bei der Anpassung des oder der Erfassungswerte(s) ergibt. Beispielsweise wird ein Fehler aufgrund der Extrapolation abgeschätzt. Vorteilhafterweise werden zugleich auch die sich durch Ableitung von Überwachungswerten aus den angepassten Erfassungswerten ergebenden Fehler berücksichtigt.

Die Erfindung betrifft ferner eine sicherheitsgerichtete Steuerungseinheit zum Synchronisieren von in einem jeweiligen Erfassungstakt gelieferten Erfassungswerten, wobei die Erfassungswerte von der sicherheitsgerichteten Steuerung in einem Überwachungstakt gemäß einer Sicherheitsfunktion verarbeitet werden, gemäß Anspruch 13.

Beispielsweise ist die sicherheitsgerichtete Steuerungseinheit dazu ausgelegt, im laufenden Betrieb eines Gerätes wie einer Kinematik, einem Roboter, einer Werkzeugmaschine oder einer sonstigen von der Steuerungseinheit angesteuerten Maschine, die Überwachungswerte zu bilden und je nachdem, ob diese in einem erwarteten oder erlaubten Bereich oder Wertebereich liegen, eine Sicherheitsfunktion auszulösen. Die Sicherheitsfunktion wird beispielsweise ebenfalls durch die Steuerung ausgelöst und gemäß festgelegten Routinen, bei welchen insbesondere ein Herunterregeln von Geschwindigkeiten bewegter Teile oder ein stromlos- oder momentenlos-Schalten von Antrieben umfasst sind.

Beispielsweise handelt es sich um eine sicherheitsgerichtete Steuerung, die verschiedene Antriebsachsen ansteuert. Beispielsweise haben die Antriebsachsen unabhängige, eigene Quarze mit jeweils eigener Zeitbasis, die nicht zwangsläufig gleich takten, d.h. die Achsen haben keine gemeinsame Uhr, sind asynchron. Beispielsweise werden die verschiedenen Antriebsachsen angesteuert, um zusammenwirkend eine gemeinsame Bewegung eines Teils oder Werkzeugs oder Roboter-Endeffektors zu erreichen. Dessen Bewegung im kartesischen Raum, die von den verschiedenen Antriebsachsen abhängig ist, wird überwacht. Die vorgeschlagene sicherheitsgerichtete Steuerung ermöglicht es, dass die Informationen der einzelnen Achsen, nämlich die jeweiligen Erfassungswerte, unter Berücksichtigung einer konsistenten Zeit gemeinsam zu einem Überwachungswert verarbeitet werden, der somit eine verlässliche Überwachung ermöglicht.

Die Erfindung wird nachfolgend anhand von Ausführungsbeispielen mit Hilfe der Figuren näher erläutert. Es zeigen:

Figur 1    eine schematische Darstellung zur Veranschaulichung des vorgeschlagenen Verfahrens gemäß einem ersten Ausführungsbeispiel der Erfindung;

Figur 2    eine schematische Darstellung eines Diagramms eines Überwachungswertes gemäß dem Stand der Technik;

Figur 3    eine schematische Darstellung eines Diagramms eines Überwachungswertes gemäß einem zweiten Ausführungsbeispiel der Erfindung.

In den Figuren sind funktionsgleiche Elemente mit denselben Bezugszeichen versehen, sofern nichts anderes angegeben ist.

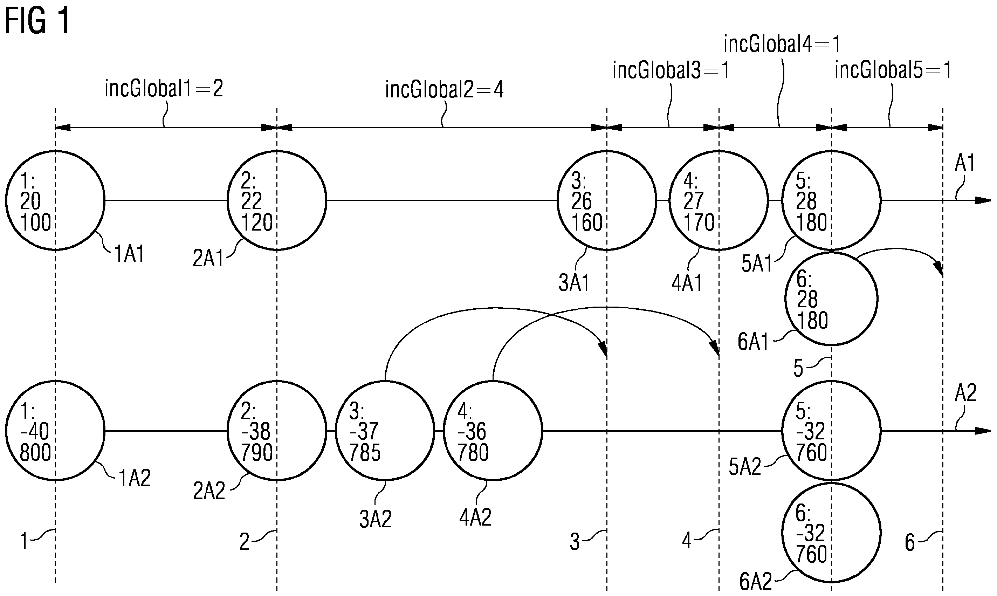

In Figur 1 ist die Funktionsweise eines software-technisch umgesetzten Telegramm-Filters gemäß einem ersten Ausführungsbeispiel der Erfindung gezeigt.

Es werden gemäß dem ersten Ausführungsbeispiel Erfassungswerte mehrerer Achsen A1, A2 und insbesondere deren Achstelegramme mit einem Telegramm-Filter zeitlich zueinander konsistent gehalten. Bei den Erfassungswerten handelt es sich um Positionsangaben der einzelnen Achsen. Der Telegramm-Filter wird in einer sicherheitsgerichteten Steuerung umgesetzt, die für die Bewegung sowie die Überwachung der Bewegung einer durch die Achsen angetriebenen Mehrachskinematik vorgesehen ist.

Der Einfachheit halber sind in Figur 1 lediglich zwei Achsen A1 und A2 mit deren jeweiligen Erfassungswerten, von diesen durch eine Steuerung empfangenen Telegrammen sowie deren Anpassungen abgebildet. In Anwendungen ist oftmals eine Vielzahl an Achsen beteiligt, welche insbesondere alle nach dem gezeigten Beispiel zueinander konsistent gehalten werden.

Die vertikalen strichlinierten Linien 1, 2, 3, 4, 5, 6 gehören zu sechs beispielshalber ausgewählten Safety-Zyklen. Diese Zyklen sind durch die sicherheitsgerichtete Steuerung vorgegeben. Je Safety-Zyklus erfolgt die Verarbeitung der von den Achsen empfangenen Telegrammen zur Bildung eines Überwachungswertes.

Die Safety-Zyklen sind insbesondere in der Zeitbasis der siherheitsgerichteten Steuerung äquidistant. In Figur 1 sind die Taktgrenzen derart beabstandet abgebildet, dass deutlich wird, in welchem zeitlichen Verhältnis die von den Achsen empfangenen Erfassungswerte zueinander stehen.

Das im ersten Safety-Zyklus 1 von Achse A1 empfangene Telegramm 1A1 hat den Zeitstempel oder Zählerwert 20 zusammen mit Position 100. Das im ersten Safety-Zyklus 1 von Achse A2 empfangene Telegramm 1A2 hat den Zeitstempel oder Zählerwert -40 zusammen mit Position 800. Diese Werte werden quasi als Startwerte verwendet und von der sicherheitsgerichteten Steuerung als gegeben und korrekt angenommen und für die Ermittlung des Überwachungswertes zugrunde gelegt.

Falls in zwei aufeinanderfolgenden Safety-Zyklen zwei unterschiedliche Telegramme der jeweiligen Achse A1 oder A2 vorliegen, so unterscheiden sich deren Zählerwerte in Ausführungen um ein bestimmtes Inkrement $i \geq 0$, $i \in N$, wobei $i$ vom Taktverhältnis Bus-Takt zu Safety-Takt abhängt. Bei einer Überabtastung kann es vorkommen, dass in zwei aufeinanderfolgenden Safety-Zyklen dasselbe Achs-Telegramm abgetastet wurde. Man spricht hier von einer Telegramm-Wiederholung, $i$ ist dann Null und derselbe Positionswert vom Vortakt liegt wieder vor, dazu folgen weitere Ausführungen im Zusammenhang mit dem sechsten Safety-Zyklus 6.

In Varianten laufen die Zykluszähler im Zahlenring, d.h. haben Maximal- und Minimalwerte und springen bei Erreichen derer z.B. von der Maximalgrenze auf die Minimalgrenze. Dies lässt sich anhand der Sprunggröße bzw. mittels Überlaufdetektion feststellen, sodass das korrekte Telegramm-Inkrement ebenfalls bestimmt werden kann und der offizielle Zählerwerte in diesen besonderen Zyklen von positiv zu negativ springt.

Bei unterschiedlichen Telegrammen und auch im Allgemeinen - da das Vorliegen einer Telegramm-Wiederholung nicht vorab bekannt ist - wird zuerst unter allen Achsen A1, A2 festgestellt, welche Achse den zeitlich aktuellsten Zeitstempel trägt, d.h. es wird nach dem maximalen Zeitinkrement gesucht durch Vergleich jeweiliger Zählerinkremente der Erfassungswerte im aktuellen Safety-Zyklus gegenüber einem vorherigen Safety-Zyklus.

Das maximale Zeitinkrement, nachfolgend als das globale Zeitinkrement incGlobal bezeichnet, unter allen Achsen wird wie folgt berechnet:

1.) incGlobal = max_k{counterCurrent_k - counterAdaptedPrevious_k}, mit incLocal_k = counterCurrent_k - counterAdaptedPrevious_k für eine beliebige Achse k, wobei folgende Definitionen gelten:

counterCurrent: empfangener Zähler im aktuellen Takt.
counterAdaptedPrevious: ggf. im Vortakt angepasster Zählerwert.

incGlobal: für alle Achsen zyklisch je Safety-Zyklus neu berechnetes globales Zeitinkrement.

Ferner werden für jede Achse folgende Schritte ausgeführt (abkürzend wird der Index k weggelassen):

2.) Falls counterDiff:= counterCurrent - counterAdaptedPrevious >0, dann aktualisiere die axiale Momentangeschwindigkeit v, mit
v := (posCurrent - posPrevious)/counterDiff

Folgende Definitionen gelten:

counterPrevious: empfangener Zähler vom Vortakt.
posCurrent: empfangener Erfassungswert, hier Positionswert, im aktuellen Takt.
posPrevious: empfangener Positionswert vom Vortakt.
Falls incLocal==incGlobal, dann wird die mit dem Telegramm übermittelte Position ohne Extrapolation weitergereicht.

Anhand von Figur 1 ist zu erkennen, dass die Positionswerte beider Achsen A1, A2 im zweiten Zyklus unverändert weitergereicht werden, da die beiden Telegramme 2A1 und 2A2 global zeitlich gleichauf sind. Beide Zählerwerte wurden um zwei Einheiten inkrementiert, so dass die beiden Achsen A1 und A2 zeitlich synchron lagen. Der globale Zeitschritt incGlobal beträgt somit für beide 2.

Ansonsten wird die Position basierend auf der zuletzt ermittelten Geschwindigkeit v extrapoliert und zwar für die Achsen, deren tatsächliches Zeitinkrement kleiner als das incGlobal ist.

Der angepasste Zeitstempel bzw. Zählerwert (counterAdapted) jedes einzelnen Telegramms leitet sich schließlich aus dem global bestimmten Zeitinkrement IncGlobal ab.

5.) counterAdapted = counterAdaptedPrevious + incGlobal.

Das heißt, dass mittels des Telegramm-Filters in jedem Safety-Takt alle Achszähler künstlich um dasselbe Zeitinkrement incGlobal inkrementieren. Die Positionswerte der Achsen A1, A2 werden somit auf einen gemeinsamen Zeitpunkt hin synchronisiert.

Im Idealfall - dieser kann wie im gezeigten Ausführungsbeispiel im zweiten Safety-Zyklus 2 auftreten - haben alle Telegramme bereits denselben Zeitpunkt und sind somit im Verbund konsistent. Alle Positionswerte können in diesem Fall ohne Manipulation in die weitere Berechnung weitergeleitet werden.

Dies wird bei einem asynchronen Betrieb jedoch nur zufällig und bei sehr kleiner Anzahl an Erfassungswerten der Fall sein.

Andernfalls wird das Inkrementieren um das globale Zeitinkrement erzwungen, insbesondere durch folgende Extrapolation mit Ordnung > 1 - also besserer Genauigkeit als bei einer puren linearen Extrapolation - ähnlich dem Kalman-Prinzip. Zunächst wird die neu gemessene Position (posCurrent) sowie die linear extrapolierte Position auf Basis des letzten Zyklus (posOutPrevious + v*incLocal) gemittelt:
posBase: = ½ * (posCurrent + (posOutPrevious + v * incLocal)), mit den Definitionen:

posBase: vorgefilterte Stützposition.
Damit wird posBase die Ausgangsposition für die Extrapolation über den Zeitraum, um den diese Achse hinterherhinkt (also incGlobal - incLocal).
posOutPrevious : im Vortakt angepasste Position.

Die extrapolierte Achsposition posOut ergibt sich zu: posOut: = posBase + v * (IncGlobal - incLocal).

Die Position der Achse A1 aus dem Telegramm 3A1 im dritten Zyklus 3 wird unverändert weitergereicht, da die Achse A1 zeitlich am aktuellsten ist. Hingegen muss die Position von Achse A2 aufgrund des dritten Telegramms 3A2 extrapoliert werden. Der Zeitstempel -37 hängt der aktuellen Zeit um 3 Inkremente hinterher und wird zu -34 adaptiert. Unter Anwendung der obigen Extrapolationsvorschrift wird Position 770 anstatt 785 ausgegeben. Ebenso muss beim vierten Telegramm 4A2 im vierten Zyklus 4 für die Achse A2 die Position zu 765 extrapoliert werden und der Zählerwert auf -33 angepasst werden. Wiederum ist das Telegramm 4A1 der Achse A1 das aktuellere.

Dies ist keinesfalls zwangsläufig der Fall, sondern je Safety-Takt kann eine beliebige Achse und insbesondere jeden Safeyt-Takt eine andere Achse diejenige mit dem aktuellsten Telegramm darstellen.

Bei Zyklus 5 liegen beide Achsen A1, A2 zeitlich gleichauf, sodass hier nur die Positionen der jeweiligen Telegramme 5A1, 5A2 weitergereicht werden müssen.

In Zyklus 6 wird an beiden Achsen A1, A2 als neues Telegramm 6A1, 6A2 jeweils dasselbe Telegramm von Zyklus 5 5A1, 5A2 nochmals empfangen. Es wird davon ausgegangen, dass dies für die sicherheitsgerichtete Überwachung eine veraltete Aussage über die Positionen der Achsen A1 und A2 ist, sodass hier beide Achsen um einen Zeitschritt incGlobal=1 in die Zukunft bzgl. der aktuellen Geschwindigkeit extrapolieren. Dies ist insbesondere dann nötig, wenn sich die sicherheitsgerichtete Überwachung auf eine abgeleitete Größe der Messwerte bezieht, beispielsweise die Geschwindigkeit. Für ein Zeitinkrement von 0 wäre die Größe dann an dieser Stelle nicht differenzierbar und es könnten keine gültigen Werte ermittelt werden.

Alle Zähler- und Extrapolationswerte sind in der folgenden Tabelle aufgelistet.

| Zyklus: | 2 | 3 | 4 | 5 | 6 |
|---|---|---|---|---|---|
| counterAdaptedA1: | 22 | 26 | 27 | 28 | 29 |
| posOutA1: | 120 | 160 | 170 | 180 | 190 |
| counterAdaptedA2: | -38 | -34 | -33 | -32 | -31 |
| posOutA2: | 790 | 770 | 765 | 760 | 755 |

Die Achs-Geschwindigkeiten v bleiben in jedem Zyklus trotz Extrapolation erhalten:

$$v = (posOut - posOutPrev)/incGlobal.$$

Im Beispiel beträgt die Geschwindigkeit für Achse A1 10 Positionseinheiten pro Antriebstakt und für A2 -5 Einheiten pro Antriebstakt.

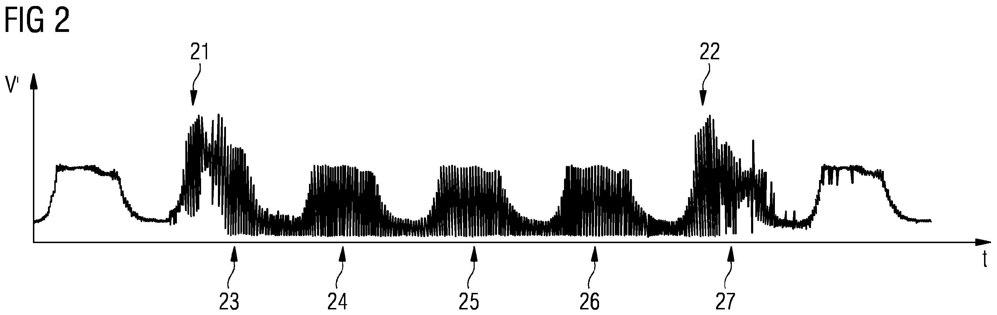

Figur 2 veranschaulicht, wie sich Überwachungswerte, die sich aus mehreren Erfassungswerten sowie Ableitungen aus diesen ergeben und die für die Durchführung einer sicheren Überwachung im Betrieb einer angetriebenen Maschine berechnet werden, im Stand der Technik verhalten. Dabei werden die Überwachungswerte beispielsweise aus über der Zeit empfangenen und aufgezeichneten Erfassungswerten berechnet und ergeben über der Zeit t aufgezeichnet das Diagramm nach Figur 2. Als Überwachungswert wird die kartesische Geschwindigkeit v' am Flansch eines SCARA 4-Achs-Roboters ausgewertet. Im Diagramm ist die ermittelte kartesische Geschwindigkeit v' zu sehen, die zu einer periodischen Bewegung des Flansches entlang einer Ellipse zugehörig ist.

Man erkennt die Periodizität der Geschwindigkeit v', sieht jedoch zudem einen überlagerten Jitter, der nicht der tatsächlichen Geschwindigkeit entspricht und der eine sinnvolle Überwachung verhindert. Der Jitter ist dabei so stark, dass der Geschwindigkeitsverlauf in der Darstellung nicht mehr aufgelöst wird. Bei höherer zeitlicher Auflösung würden die Schwankungen als getrennte Ausschläge sichtbar. Insbesondere führen ermittelte Überschwinger 21,22 in der kartesischen Geschwindigkeit v' im zweiten sowie im sechsten abgebildeten Bewegungszyklus zum Einleiten eines unnötigen Stoppvorganges: Ein Grenzwert für das Einleiten eines Stoppvorganges sollte vorteilhafterweise möglichst nah an der vorgesehenen kartesischen Geschwindigkeit liegen. Beispielsweise nimmt der Grenzwert einen zeitlichen Verlauf mit der gleichen Periodizität der kartesischen Geschwindigkeit ein und liegt zu jeder Zeit knapp oberhalb der erwarteten Geschwindigkeit. Dieser Grenzwert liegt beispielsweise entsprechend so, dass er im zweiten und sechsten Bewegungszyklus durch die ermittelte kartesische Geschwindigkeit v' im Überwachungsfall überschritten würde.

Es wird somit jeweils eine Sicherheitsfunktion eingeleitet, die nicht notwendig ist, da die tatsächliche kartesische Geschwindigkeit zum Zeitpunkt eines Überschwingers niedriger war als die ermittelte kartesische Geschwindigkeit v' mit den Überschwingern 21, 22. Ebenso liegt die ermittelte Geschwindigkeit aufgrund der Schwankungen nach unten 23, 24, 25, 26, 27 immer wieder unterhalb der tatsächlichen Geschwindigkeit des Flansches, sodass fälschlicherweise eine zu niedrige Geschwindigkeit ermittelt wird und somit potentielle gefährliche Situationen bei einer Gefahreneinschätzung basierend auf der ermittelten Geschwindigkeit nicht erkannt würden.

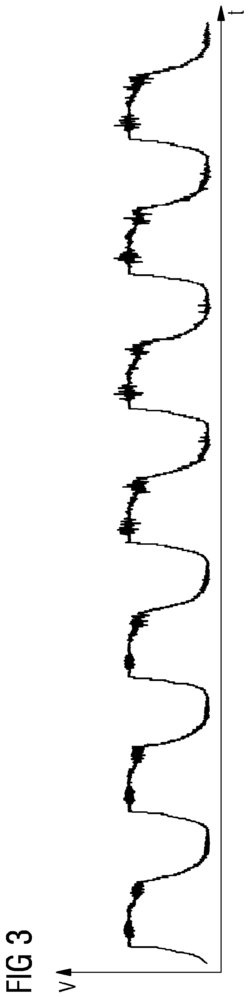

Für das gleiche Szenario zeigt Figur 3 die Aufzeichnung des Überwachungswertes der kartesischen Geschwindigkeit v gemäß einem zweiten Ausführungsbeispiel der Erfindung, ansonsten analog zu der in Figur 2 gezeigten kartesischen Geschwindigkeit v'.

Es wird gemäß dem zweiten Ausführungsbeispiel auf die empfangenen Telegramme mit den Positionswerten eine Synchronisierung angewendet, die alle Positionen auf den Zeitpunkt des aktuellsten Zählerwertes hin extrapoliert. Erst mit diesen synchronisierten Positionswerten wird als Überwachungswert die jeweils am Flansch vorliegende kartesische Geschwindigkeit berechnet. Die auf Grundlage der synchronisierten Positionen ermittelte kartesische Geschwindigkeit v zeigt den in Figur 3 dargestellten geglätteten Verlauf. Man erkennt, dass der periodische Verlauf kaum durch Jitter verfälscht wird.

Eine Überwachung der kartesischen Geschwindigkeit, um unerlaubte hohe Geschwindigkeiten, beispielsweise in davor festgelegten Zonen, zu verhindern, ist mit der Anpassung der Positionswerte mit deutlich höherer Genauigkeit und Zuverlässigkeit möglich.

Zur noch weiteren Erhöhung der Präzision bei der Geschwindigkeitsüberwachung wird zusätzlich eine Fehlerbetrachtung durchgeführt.

Die Extrapolation unterstellt, dass für die zu extrapolierende Zeitdauer die Achse sich weiter mit der zuletzt bekannten Momentangeschwindigkeit weiterbewegt. Dies kann zu Positionsfehlern führen, falls die Achse in der Zeit beschleunigt oder abbremst. Zur Bestimmung des Achs-Positionsfehlers sind vier Fälle zu unterscheiden:

1.) Das Telegramm im vorherigen Zyklus ist zeitlich aktuell und es gilt: posOutPrev = posPrev, counterAdapted = counterPrevious UND im aktuellen Zyklus liegt ein Telegrammwiederholer vor: posCurrent = posPrev sowie counterCurrent = counter-Prev. Somit folgt, dass counterDiff = counterDiffToAdapted = 0. Hier beträgt der Positionsfehler

$$\texttt{pe = a/2 * (counterIncGlobal)}^2,$$

wobei für a die typische oder maximale Achsbeschleunigung herangezogen werden kann.

2.) Das Telegramm im vorherigen Zyklus ist zeitlich aktuell und es gilt: posOutPrev = posPrev, counterAdapted = counterPrevious UND das Telegramm im aktuellen Zyklus hängt zeitlich hinterher: counterDiff = counterDiffToAdapted < counterIncGlobal. Es folgt für den Positionsfehler pe:

$$\texttt{pe = a/2 * (counterIncGlobal - counterDiff)}^2.$$

3.) Das Telegramm im vorherigen Zyklus und das Telegramm im aktuellen Zyklus hängen zeitlich hinterher UND im aktuellen Zyklus liegt kein Telegrammwiederholer vor. Es gilt mit pePrev (Positionsfehler im Vortakt) für den Positionsfehler:

pe = a/2 * (counterIncGlobal - counterDiffToAdapted)$^2$ + ½ * pePrev.

4.) Das Telegramm im vorherigen Zyklus und das Telegramm im aktuellen Zyklus hängen zeitlich hinterher UND im aktuellen Zyklus liegt ein Telegrammwiederholer vor. posCurrent = posPrevious, counterCurrent = counterPrevious: Der Positionsfehler ergibt sich zu pe = ½ * pePrev + a/2 * (½ * counterDiffToAdapted2 + (counterIncGlobal - counterDiffToAdapted)$^2$).

Wenn zusätzlich der maximale Zeitversatz unter allen Achsen allowedCycleDiff beschränkt wird, dann kann der Positionsfehler nach oben abgeschätzt werden. Die Einhaltung dieser Beschränkung wird zusätzlich überwacht.
Es gilt

a.) (counterIncGlobal - counterDiffToAdapted) $\leq$ allowedCycleDiff und
b.) |counterDiffToAdapted| $\leq$ allowedCycleDiff

Weiterhin kann für eine vereinfachte Fehlerabschätzung posBase = posCurrent verwendet werden, sodass der Fehlerterm vom Vortakt pePrev entfällt.
Daraus ergibt sich zusammenfassend folgende obere Schranke für Fall 2.) bis 4.):

$$\texttt{pe} \leq \texttt{¾ * a * allowedCycleDiff}^2$$

Fall 1 lässt sich zusammenfassen zu:

$$\texttt{pe} \leq \texttt{½ * a * (max(allowedCycleDiff, 2*}i\texttt{))}^2.$$

Zum Beispiel ergibt sich für einen 6-Achs-Roboter mit 5 kg Nutzlast und 0.9m Reichweite, mit maximaler axialer Beschleunigung von Achse 1 = 288°/s$^2$ bzw. 0.288 Milligrad/ms$^2$ und allowedCycleDiff = 2 sowie einer Zeitdauer pro Inkrement ti von 2ms unter Verwendung obiger Fehlerformel pe $\leq$ ¾ * a * (allowedCycleDiff* t$i$)$^2$ und der Annahme, dass allowedCycleDiff größer gleich 2*i ist, dass der maximale Positionsfehler von Achse 1 3.456 Milligrad beträgt.
Diese Positionsfehlerbetrachtung wird vorteilhafterweise für alle Achsen durchgeführt und in einer Fehlerfortpflanzungsabschätzung auch für die kartesische Geschwindigkeit berücksichtigt. Entsprechend wird ein Grenzwert für die Überwachung der Geschwindigkeit gemäß dem Fehler für diese reduziert, um eine ausreichend sichere Geschwindigkeitsüberwachung sicherzustellen.
Mit dem vorgeschlagenen Verfahren sowie der vorgeschlagenen Steuerung wird insbesondere im Umfeld von bewegten Kinematiken eine zuverlässige Geschwindigkeits- und Positionsüberwachung bei asynchronem Achsbetrieb ermöglicht und gewährleistet. Eine sichere Positions- und Geschwindigkeitsüberwachung ist somit auch möglich, wenn der Bus-Takt mit dem Safety-Takt zeitlich nicht synchronisiert ist, also im asynchronen Achsbetrieb. Somit muss keine Ausgangssituation vorliegen, bei der Achstelegramme vom Bus in jedem Safety-Takt zu äquidistanten Zeitpunkten gelesen und verarbeitet werden. Vor allem für die sichere Positions- und Geschwindigkeitsüberwachung von Bewegungen im dreidimensionalen, kartesischen Raum ist damit eine Lösung auch für den asynchronen Achsbetrieb gefunden.

**Patentansprüche**

1. Verfahren zum Synchronisieren von in einem jeweiligen Erfassungtakt gelieferten Erfassungswerten, wobei die Erfassungswerte von einer sicherheitsgerichteten Steuerung in einem Überwachungtakt gemäß einer Sicherheitsfunktion verarbeitet werden,

   - wobei in einem aktuellen Überwachungszyklus des Überwachungstaktes jeweilige Zählerinkremente der Erfassungswerte gegenüber einem vorherigen Überwachungszyklus miteinander verglichen werden und ein maximales Zählerinkrement ermittelt wird,
   - wobei diejenigen Erfassungswerte, die nicht das maximale Zählerinkrement aufweisen, anhand des maximalen Zählerinkrementes angepasst werden,
   - wobei basierend auf dem oder den angepassten Erfassungswerten sowie dem oder den zu dem maximalen Zählerinkrement zugehörigen Erfassungswerten durch die Sicherheitsfunktion mindestens ein Überwachungswert gebildet wird,

   wobei die jeweiligen Zählerinkremente durch einen Abgleich des Zählerwertes im aktuellen Überwachungstakt mit einem Zählerwert des Erfassungswertes im vorherigen Überwachungstakt ermittelt werden, und wobei diejenigen Erfassungswerte, die nicht das maximale Zählerinkrement aufweisen, angepasst werden, indem eine Extrapolation anhand zuvor ermittelter oder zuvor angepasster Erfassungswerte durchgeführt wird.

2. Verfahren nach Anspruch 1, wobei die Erfassungswerte in einem gemeinsamen Erfassungstakt geliefert werden.

3. Verfahren nach Anspruch 1 oder 2, wobei der Überwachungtakt von dem Erfassungtakt oder zumindest von einzelnen Erfassungtakten abweicht.

4. Verfahren nach einem der vorstehenden Ansprüche, wobei die Erfassungswerte mittels eines Telegramms (1A1, 1A2, 2A1, 2A2,...) an die sicherheitsgerichtete Steuerung geliefert werden.

5. Verfahren nach einem der vorstehenden Ansprüche, wobei die Erfassungswerte von jeweiligen Achsen (A1, A2,...) einer Mehrachskinematik geliefert werden.

6. Verfahren nach Anspruch 5, wobei die sicherheitsgerichtete Steuerung die Erfassungswerte von verteilten Erfassungssystemen erhält.

7. Verfahren nach einem der vorstehenden Ansprüche, wobei als Erfassungswerte Positionswerte, Geschwindigkeitswerte, Kraftwerte, Stromwerte oder Spannungswerte erfasst werden.

8. Verfahren nach einem der vorstehenden Ansprüche, wobei die Sicherheitsfunktion basierend auf aus dem oder den angepassten Erfassungswerten sowie aus dem oder den zu dem maximalen Zählerinkrement zugehörigen Erfassungswerten abgeleiteten Größen den mindestens einen Überwachungswert bildet.

9. Verfahren nach einem der vorstehenden Ansprüche, wobei ein parametrierbarer Grenzwert eingerichtet wird, der eine erlaubte Differenz jeweiliger Zählerinkremente festlegt.

10. Verfahren nach einem der vorstehenden Ansprüche, wobei die Sicherheitsfunktion abhängig von dem mindestens einen Überwachungswert Sicherheitsfunktionen einleitet.

11. Verfahren nach einem der vorstehenden Ansprüche, wobei durch die Sicherheitsfunktion ein Fehler berechnet wird, der bei der Überwachung des Überwachungswertes berücksichtigt wird.

12. Verfahren nach Anspruch 1, wobei die Erfassungswerte in jeweiligen unterschiedlichen Erfassungstakten geliefert werden.

13. Sicherheitsgerichtete Steuerungseinheit zum Synchronisieren von in einem jeweiligen Erfassungstakt gelieferten Erfassungswerten, wobei die Erfassungswerte von der sicherheitsgerichteten Steuerung in einem Überwachungstakt gemäß einer Sicherheitsfunktion verarbeitet werden,

- ausgebildet zum Vergleichen jeweiliger Zählerinkremente der Erfassungswerte in einem aktuellen Überwachungszyklus des Überwachungstaktes gegenüber einem vorherigen Überwachungszyklus und zum Ermitteln eines maximalen Zählerinkrements,
- ausgebildet zum Anpassen derjenigen Erfassungswerte, die nicht das maximale Zählerinkrement aufweisen, anhand des maximalen Zählerinkrementes,
- ausgebildet zum Bilden mindestens eines Überwachungswertes basierend auf dem oder den angepassten Erfassungswerten sowie dem oder den zu dem maximalen Zählerinkrement zugehörigen Erfassungswerten durch die Sicherheitsfunktion,

wobei die sicherheitsgerichtete Steuerungseinheit dazu eingerichtet ist, die jeweiligen Zählerinkremente durch einen Abgleich des Zählerwertes im aktuellen Überwachungstakt mit einem Zählerwert des Erfassungswertes im vorherigen Überwachungstakt zu ermitteln, und wobei die sicherheitsgerichtet Steuerungseinheit weiter dazu eingerichtet ist, diejenigen Erfassungswerte, die nicht das maximale Zählerinkrement aufweisen, anzupassen, indem eine Extrapolation anhand zuvor ermittelter oder zuvor angepasster Erfassungswerte durchgeführt wird.

14. Sicherheitsgerichtete Steuerung nach Anspruch 13, ferner ausgestaltet zur Durchführung eines der Verfahren nach den Ansprüchen 2 bis 12.

## Claims

1. Method for synchronizing measurement values delivered in a respective measurement phase, wherein the measurement values are processed by a safety-oriented controller in a monitoring phase in accordance with a safety function,

- wherein, in a current monitoring cycle of the monitoring phase, respective counter increments of the measurement values are compared with one another with respect to a previous monitoring cycle, and a maximum counter increment is determined,
- wherein the measurement values that do not have the maximum counter increment are adjusted on the basis of the maximum counter increment,
- wherein the safety function forms at least one monitoring value on the basis of the adjusted measurement value or values and the measurement value or values associated with the maximum counter increment,

wherein the respective counter increments are determined by comparing the counter value in the current monitoring phase with a counter value of the measurement value in the previous monitoring phase, and wherein the measurement values that do not have the maximum counter increment are adjusted by performing an extrapolation on the basis of previously determined or previously adjusted measurement values.

2. Method according to Claim 1, wherein the measurement values are delivered in a common measurement phase.

3. Method according to Claim 1 or 2, wherein the monitoring phase differs from the measurement phase or at least from individual measurement phases.

4. Method according to one of the preceding claims, wherein the measurement values are delivered to the safety-oriented controller by means of a telegram (1A1, 1A2, 2A1, 2A2,...).

5. Method according to one of the preceding claims, wherein the measurement values are delivered by respective axes (A1, A2,...) of multi-axis kinematics.

6. Method according to Claim 5, wherein the safety-oriented controller receives the measurement values from distributed measurement systems.

# EP 4 388 374 B1

7. Method according to one of the preceding claims, wherein position values, velocity values, force values, current values or voltage values are acquired as measurement values.

8. Method according to one of the preceding claims, wherein the safety function forms the at least one monitoring value on the basis of variables derived from the adjusted measurement value or values and from the measurement value or values associated with the maximum counter increment.

9. Method according to one of the preceding claims, wherein a parameterizable limit value is set up which defines a permitted difference for respective counter increments.

10. Method according to one of the preceding claims, wherein the safety function initiates safety functions according to the at least one monitoring value.

11. Method according to one of the preceding claims, wherein the safety function calculates an error that is taken into account when monitoring the monitoring value.

12. Method according to Claim 1, wherein the measurement values are delivered in respective different measurement phases.

13. Safety-oriented control unit for synchronizing measurement values delivered in a respective measurement phase, wherein the measurement values are processed by the safety-oriented controller in a monitoring phase in accordance with a safety function,

- designed to compare respective counter increments of the measurement values in a current monitoring cycle of the monitoring phase with respect to a previous monitoring cycle and to determine a maximum counter increment,
- designed to adjust the measurement values that do not have the maximum counter increment on the basis of the maximum counter increment,
- designed to form at least one monitoring value on the basis of the adjusted measurement value or values and the measurement value or values associated with the maximum counter increment by means of the safety function,

wherein the safety-oriented control unit is configured to determine the respective counter increments by comparing the counter value in the current monitoring phase with a counter value of the measurement value in the previous monitoring phase, and wherein the safety-oriented control unit is further configured to adjust the measurement values that do not have the maximum counter increment by performing an extrapolation on the basis of previously determined or previously adjusted measurement values.

14. Safety-oriented controller according to Claim 13, further designed to carry out one of the methods according to Claims 2 to 12.

**Revendications**

1. Procédé de synchronisation de valeurs de détection fournies lors d'une cadence de détection respective, où les valeurs de détection sont traitées par une commande de sécurité dans une cadence de surveillance selon une fonction de sécurité,

- dans lequel dans un cycle de surveillance actuel de la cadence de surveillance, des incréments de compteur des valeurs de détection sont comparées entre elles par rapport à un cycle de surveillance antérieur et un incrément de compteur maximal est déterminé,
- dans lequel les valeurs de détection qui ne présentent pas l'incrément de compteur maximal sont adaptées sur la base de l'incrément de compteur maximal,
- dans lequel sur la base de la ou des valeurs de détection adaptées ainsi que du ou des incréments de compteur maximaux des valeurs de détection, une valeur de surveillance est créée par la fonction de sécurité,

dans lequel les incréments de compteur respectifs sont déterminés par une comparaison de la valeur de compteur à la cadence de surveillance actuelle avec une valeur de compteur de la valeur de détection à la cadence de surveillance antérieure, et dans lequel les valeurs de détection qui ne présentent pas l'incrément de compteur maximal sont adaptées tandis qu'une extrapolation est effectuée sur la base de valeurs de détection déterminées précédemment ou adaptées précédemment.

2. Procédé selon la revendication 1, dans lequel les valeurs de détection sont fournies dans une cadence de détection commune.

3. Procédé selon la revendication 1 ou 2, dans lequel la cadence de surveillance dévie de la cadence de détection ou au moins de certaines cadences de détection.

4. Procédé selon l'une des revendications précédentes, dans lequel les valeurs de détection sont fournies par un télégramme (1A1, 1A2, 2A1, 2A2,...) à la commande de sécurité.

5. Procédé selon l'une des revendications précédentes, dans lequel les valeurs de détection de chaque axe (A1, A2,...) d'une cinématique multiaxiale sont fournies.

6. Procédé selon la revendication 5, dans lequel la commande de sécurité reçoit les valeurs de détection de systèmes de détection répartis.

7. Procédé selon l'une des revendications précédentes, dans lequel sont détectées comme valeurs de détection des valeurs de position, des valeurs de vitesse, des valeur de force, des valeurs de courant ou des valeurs de tension.

8. Procédé selon l'une des revendications précédentes, dans lequel la fonction de sécurité génère l'au moins une valeur de surveillance sur la base de valeurs dérivées de la ou des valeurs de détection adaptées ainsi que de la ou des valeurs de détection respectives du ou des incréments de compteur maximaux.

9. Procédé selon l'une des revendications précédentes, dans lequel une valeur limite paramétrable est créée qui détermine une différence autorisée entre les incréments de compteur respectifs.

10. Procédé selon l'une des revendications précédentes, dans lequel la fonction de sécurité introduit des fonctions de sécurité en fonction de l'au moins une valeur de surveillance.

11. Procédé selon l'une des revendications précédentes, dans lequel une erreur est calculée par la fonction de sécurité qui est prise en compte lors de la surveillance de la valeur de surveillance.

12. Procédé selon la revendication 1, dans lequel les valeurs de détection sont fournies lors de différentes cadences de détection respectives.

13. Unité de commande de sécurité pour synchroniser des valeurs de détection fournies lors d'une cadence de détection respective, où les valeurs de détection sont traitées par la commande de sécurité dans une cadence de surveillance selon une fonction de sécurité,

- conçue pour comparer des incréments de compteur respectifs des valeurs de détection dans un cycle de surveillance actuel de la cadence de surveillance par rapport à un cycle de surveillance antérieur et pour déterminer un incrément de compteur maximal,
- conçue pour adapter les valeurs de détection qui ne présentent pas l'incrément de compteur maximal sur la base de l'incrément de compteur maximal,
- conçue pour créer au moins une valeur de surveillance sur la base de la ou des valeurs de détection adaptées ainsi que du ou des valeurs de détection respectives de l'incrément de compteur maximal par la fonction de sécurité,

dans lequel l'unité de commande de sécurité est conçue pour déterminer les incréments de compteur respectifs par une comparaison de la valeur de compteur à la cadence de surveillance actuelle avec une valeur de compteur de la valeur de détection à la cadence de surveillance antérieure, et dans lequel l'unité de commande de sécurité est conçue en outre pour adapter les valeurs de détection qui ne présentent pas l'incrément de compteur maximal tandis qu'une extrapolation est effectuée sur la base de valeurs de détection déterminées précédemment ou adaptées précédemment.

14. Commande de sécurité selon la revendication 13, configurée en outre pour réaliser l'un des procédés selon les revendications 2 à 12.

FIG 1

EP 4 388 374 B1

FIG 2

EP 4 388 374 B1

EP 4 388 374 B1

FIG 3

**EP 4 388 374 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20160329975 A1
- DE 102020205521 A1
- EP 2924519 A1